Europäisches Patentamt

European Patent Office

Office européen des brevets

(19)

(11) EP 1 152 502 A1

(12) EUROPEAN PATENT APPLICATION
published in accordance with Art. 158(3) EPC

(43) Date of publication:
07.11.2001 Bulletin 2001/45

(51) Int Cl.7: H01S 3/10, H01S 3/067,
G02B 6/16

(21) Application number: 00976391.3

(22) Date of filing: 21.11.2000

(86) International application number:
PCT/JP00/08201

(87) International publication number:
WO 01/39339 (31.05.2001 Gazette 2001/22)

(84) Designated Contracting States:
AT BE CH CY DE DK ES FI FR GB GR IE IT LI LU
MC NL PT SE TR

(30) Priority: 26.11.1999 JP 33552799

(71) Applicant: THE FURUKAWA ELECTRIC CO., LTD.
Tokyo 100-8322 (JP)

(72) Inventor: AISO, Keiichi,
The Furukawa Electric Co. Ltd.
Tokyo 100-8322 (JP)

(74) Representative: Dealtry, Brian et al
Eric Potter Clarkson,
Park View House,
58 The Ropewalk
Nottingham NG1 5DD (GB)

(54) **OPTICAL FIBER FOR OPTICAL AMPLIFYING**

(57) In an optical communication and the like, a light amplifying optical fiber is capable of amplifying an optical signal having a wavelength in the vicinity of at least 1.57 to 1.62 μm by a high gain. A cladding (5) is formed on the side of an outer peripheral portion of a core (1) to which erbium is added, and a refractive index of the cladding is smaller than that of the core (1). A relative refractive index difference "Δ" of the core (1) with respect to the cladding (5) is made equal to 0.3 % or larger, and also equal to 1 % or smaller. While a composition of the core (1) is made of $Er-Al_2O_3-GeO_2-SiO_2$, a composition of the cladding (5) is made of $SiO_2$, erbium is added to the entire region of the core, and concentration of this erbium is selected to be 1,000 wtppm, and also a cut-off wavelength of the optical fiber is selected to be 1,400 nm. While the cut-off wavelength of the optical fiber is made constant, since the relative refractive index difference "Δ" is selected to be an optimum value, a diameter of the core may become an optimum value. Lowering of the gain caused by a bending loss of the optical fiber can be avoided, and an erbium absorption amount per unit length of the optical fiber can be increased, and further, a gain per unit length of the optical fiber can be increased

Fig. 1

**Description**

Technical Field

The present invention is related to a light amplifying optical fiber employed in, for instance, the wavelength division multiplexing optical transmission (WDM transmission) system or the like.

Background Art

While great progress is made in information technology society, there is a trend that communication information amount is considerably increasing. With such increase in communication amount, the wavelength division multiplexing optical transmission system (WDM transmission system) is widely accepted to communication fields, and it is the time of such wavelength division optical transmission system. In the wavelength division multiplexing optical transmission technique, light having a plurality of wavelengths can be transmitted by using a single set of optical fiber. As a result, this wavelength division multiplexing optical transmission may constitute such an optical transmission system suitable for large capacity, high speed communications. Presently, the wavelength division multiplexing optical transmission is carried out with a light amplifying optical fiber applied as an optical amplifier, and the optical transmission is performed in the vicinity of wavelengths defined between 1.53 $\mu$m and 1.56 $\mu$m (referred to as a "C-BAND" hereinafter) which corresponds to the gain range of this optical amplifier.

As described above, a light amplifying optical fiber employed in the wavelength division multiplexing optical transmission system within the C-BAND range is manufactured by employing the following structure. That is, a cladding of this light amplifying optical fiber is formed on the side of an outer peripheral portion of a core into which erbium (Er) is added, with a refractive index of this cladding smaller than that of the core. Since a relative refractive index difference "$\Delta$" of the core with respect to the cladding is selected to be, for example, approximately 1.2 to 2 %, density of pumping light may be increased. Furthermore, since the core is made narrower, and erbium ions are localized in such a portion where the intensity of the pumping light is high, population inversion may be formed under a better condition over the entire portion into which erbium ions have been added.

On the other hand, recently, demands are made to widen the used wavelength range of this wavelength division multiplexing optical transmission in order that communication information amount is furthermore increased. Active discussions are being presently made as to such investigations that the used wavelength range of the wavelength division multiplexing optical transmission system may be extended up to the wavelength range in the vicinity of approximately 1.57 $\mu$m to 1.62 $\mu$m (referred to as an "L-BAND" hereinafter) by employing the above-explained light amplifying optical fiber.

However, in the case that the above-explained conventional light amplifying optical fiber which amplifies the light of the above-explained conventional C-BAND range is employed, since the gain coefficient of the light in the L-BAND range as to this light amplifying optical fiber is smaller compared to that of the light in the C-BAND range, the entire length of this light amplifying optical fiber must be necessarily made long. As a result, there are many problems that the noise figures and the polarization mode dispersion (PMD) are increased, and both the nonlinear optical effects and the chromatic dispersion are accumulated. Moreover, there is another problem that manufacturing cost of an optical amplifier using this light amplifying optical fiber is increased. Under such a circumstance, developments of light amplifying optical fibers whose gain efficiencies of the L-BAND range are increased are required, by which the used wavelength range of the wavelength division multiplexing optical transmission system can be widened.

Also, in the C-BAND range, with an increase in the total number of signal channels, higher signal light power is required. The increase in the signal light power may induce the nonlinear phenomenon in the light amplifying optical fiber. As a result, the necessity of such a light amplifying optical fiber capable of increasing a gain efficiency is increased also in the C-BAND range.

In order to increase a gain efficiency of an optical fiber into which erbium (Er) is added, it is considered effective to increase an absorption amount of erbium (Er) per unit length of an optical fiber. One of the means for increasing an absorption amount of erbium per unit length of an optical fiber is to increase concentration of erbium which is added to this optical fiber. However, when the concentration of erbium is increased, the efficiency is lowered due to concentration quenching, so that there is an upper limit in the concentration of erbium which can be added to the optical fiber. For instance, a limit value of erbium concentration in alumina silicate glass into which aluminum is added in conjunction with erbium is known as 1,000 wtppm.

Also, as another means for increasing the absorption amount of erbium per unit length of the optical fiber, a cut-off wavelength of a light amplifying optical fiber is shifted to a side of a long wavelength, and thus, an overlap integral between a distribution profile of erbium and a mode distribution of light which is propagated through an optical fiber is increased, so as to increase an absorption amount of pumping light per unit length. However, when the cut-off wavelength is made longer than the wavelength (for example, 1.48 $\mu$m) of the pumping light wavelength used for erbium, the single mode propagation of the pumping light cannot be guaranteed. As a consequence, there is an upper limit in the cut-off wavelength of the light amplifying optical fiber.

As apparent from the foregoing description, conventionally, a light amplifying optical fiber in which, while the used wavelength range of the wavelength division multiplexing optical transmission is located in the longer wavelength side than the C-BAND range, the gain efficiency of the L-BAND range is increased, has not been proposed.

The present invention has been made to solve the above-explained problems of the conventional light amplifying optical fiber, and therefore, has an object to provide a light amplifying optical fiber capable of mainly increasing a gain efficiency of the L-BAND range, and also capable of performing a wavelength division multiplexing optical transmission, while an entire length of the light amplifying optical fiber is shortened.

Disclosure of the Invention

To achieve the above-described object, the present invention may provide a light amplifying optical fiber having the structure below. A first light amplifying optical fiber of the present invention is featured by such a light amplifying optical fiber in which erbium is added into at least a core thereof, a cladding is formed on the side of an outer peripheral portion of the core, the cladding having a refractive index smaller than that of the core, and a reiative refractive index difference of the core with respect to the cladding is equal to 0.3 % or larger, and also equal to 1 % or smaller.

Also, in the light amplifying optical fiber of the present invention, a diameter of the core of the light amplifying optical fiber is preferably selected to be a core diameter value which is larger than, or equal to a core diameter at a position where a mode field diameter becomes a minimum on a characteristic line indicative of a relationship between a mode field diameter and a core diameter in a pumping light wavelength of an optical amplification.

As previously described, inventors of the present invention have considered the relationship, in the optical fiber in which the cladding whose refractive index is smaller than that of the core was formed on the side of the outer peripheral portion of the core into which erbium ions have been added, while the relative refractive index difference of the cladding with respect to the core was employed as a parameter, the relationship between the value of this relative refractive index difference and the gain in the L-BAND range. It should be understood that while the composition of the core was made of $Er\text{-}Al_2O_3\text{-}GeO_2\text{-}SiO_2$, and the composition of the cladding was made of $SiO_2$, erbium was added to the overall region of the core and also the concentration of this erbium was selected to be 1,000 wtppm. Also, the cut-off wavelength was selected to be 1,400 nm. As a result, inventors of the present invention could recognize that when the relative refractive index difference was made equal to 0.3 % or larger, and also equal to 1 % or smaller, the gain was present within the region which was lowered by 3 dB from the maximum value.

With employment of the above-described structure of the present invention, since the relative refractive index difference of the core with respect to the cladding is determined based upon the above-explained consideration result, the light amplifying optical fiber having the high gain can be obtained, which is suitable for at least the L-BAND range.

In other words, in accordance with the present invention, in order to obtain a proper optical amplification at least in the L-BAND range, while the relative refractive index difference of the core with respect to the cladding for forming the light amplifying optical fiber is defined, the optimum refractive index profile of the light amplifying optical fiber is determined. As a result, such a light amplifying optical fiber having the high gain at least in the L-BAND range can be manufactured. As a consequence, when the light amplifying optical fiber according to the present invention is applied to, for example, the wavelength division multiplexing optical transmission, since at least the signal light of the L-BAND range can be amplified by this optical fiber having the shorter length than that of the conventional optical fiber, it is possible to construct such a transmission system at low cost, which can advantageously suppress the various problems such as increasing of the noise figure and the polarization mode dispersion (PMD), the non-linear optical effect, and the accumulation of chromatic dispersion.

Also, an overlap integral between a mode distribution of light propagated through the light amplifying optical fiber and a distribution profile of erbium ions can be increased in such a manner that a diameter of the core of the light amplifying optical fiber is selected to a core diameter value which is larger than, or equal to a core diameter at a position where a mode field diameter becomes a minimum on a characteristic line indicative of a relationship between a mode field diameter and a core diameter in an pumping light wavelength of an optical amplification. As a consequence, the energy absorption amount caused by the erbium ions per unit length of the optical fiber can be increased, and also, the gain per unit length of the optical fiber can be increased.

Brief Description of the Drawings

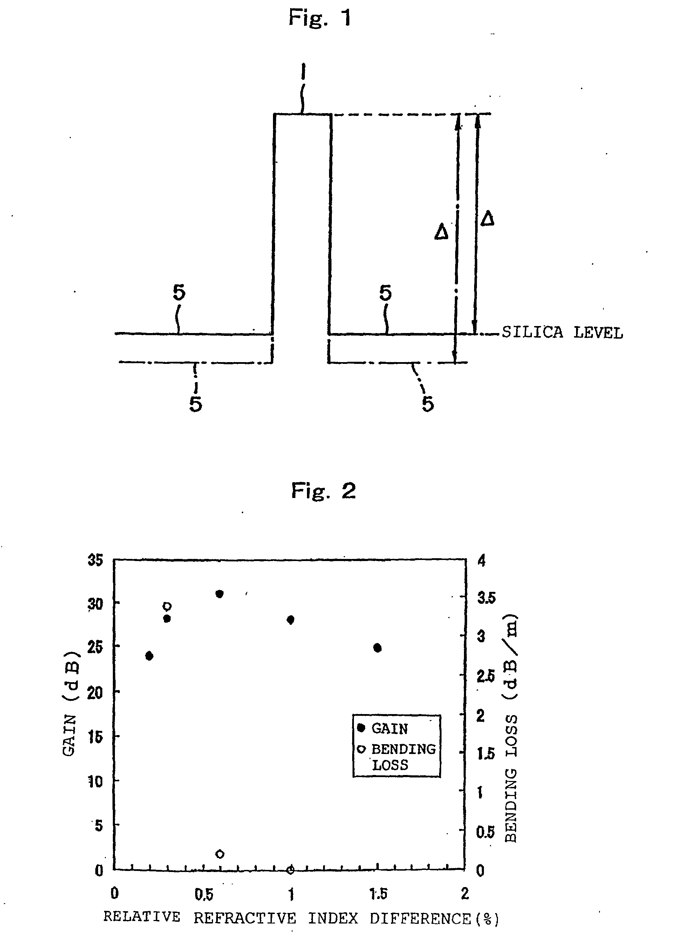

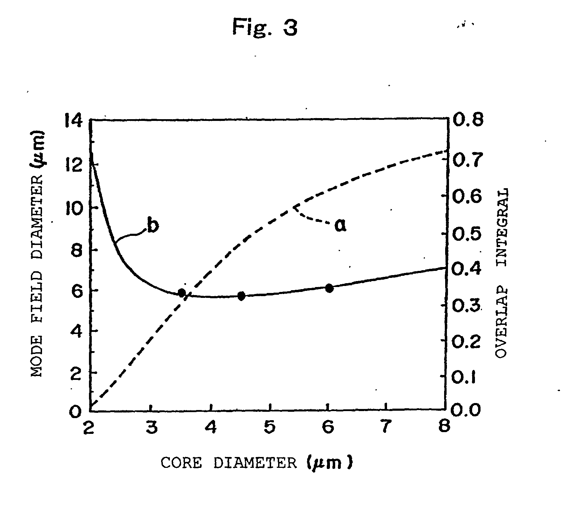

Fig. 1 is a major structural diagram for representing a refractive index profile of a light amplifying optical fiber according to an embodiment of the present invention; Fig. 2 is a graphic representation showing a relationship between a relative refractive index difference "$\Delta$" of a core with respect to a cladding in the light amplifying optical fiber having the above-explained refractive index profile and a gain obtained when signal light of the L-BAND range is entered into the light amplifying optical fiber; and Fig. 3 is a graphic representation for indicating a relationship between a core diameter and a mode field diameter in the light amplifying optical fiber having the refractive index profile shown in Fig. 1, and further, for graphically showing a relationship between the core diameter and an overlap integral made of both a mode distribution of propagation light and a distribution profile of erbium ions.

Best Mode for carrying out the Invention

For a detailed description of the present invention, the present invention will now be described with reference to the accompanying drawings. In Fig. 1, a refractive index profile of a light amplifying optical fiber according to a first embodiment of the present invention is indicated by a solid line. As represented in this drawing, the light amplifying optical fiber of this embodiment is constituted by forming a cladding 5 having a refractive index smaller than that of a core 1 on the side of an outer peripheral portion of the core 1 into which erbium is added. A feature of this embodiment is that, a relative refractive index difference "$\Delta$" of the core 1 with respect to the cladding 5 is selected to be equal to 0.3 % or larger, and equal to 1 % or smaller.

It should be understood that the above-explained relative refractive index difference "$\Delta$" may be defined by the following formula (1), assuming now that refractive index of the core 1 is "$n_1$", and a refractive index of the cladding 5 is "$n_0$", when a vacuum refractive index is selected to be "1".

$$\Delta = \{(n_1{}^2 - n_0{}^2)/2n_1{}^2\} \times 100 \tag{1}$$

In order to specify a structure of a light amplifying optical fiber according to the present invention, inventors of the present invention manufactured the following light amplifying optical fibers as a trial model, as indicated in a table 1, with a core composition made of $Er\text{-}Al_2O_3\text{-}GeO_2\text{-}SiO_2$, and a cladding composition made of $SiO_2$, with erbium added to the entire region of the core, the concentration of which was selected to be 1,000 wtppm, and a cut-off wavelength was selected to be 1,400 nm. Also, the relative refractive index differences "$\Delta$" of the core 1 with respect to the cladding 5 were selected to be the respective values indicated in the table 1. Then, a gain obtained in a wavelength of 1.58 $\mu$m of each of these light amplifying optical fibers manufactured as the trial model was measured as follows.

That is, while the length of each of the optical fibers manufactured as the trial models was selected to be 100 m and this optical fiber was wound to have a diameter of 30 mm, pumping light having a wavelength of 1.48 $\mu$m was entered into each of the optical fibers manufactured as the trial models in the bidirectional pumping. Then, a gain of such signal light whose wavelength was 1.58 $\mu$m and whose power was -12 dBm was measured. Also, power of light sources employed so as to excite erbium ions in the bidirectional manner was selected to be 150 mW in total.

(TABLE 1)

| | |
|---|---|
| core composition | $Er\text{-}Al_2O_3\text{-}GeO_2\text{-}SiO_2$ |
| cladding composition | $SiO_2$ |
| relative refractive index difference | 0.2, 0.3, 0.6, 1.0, 1.5% |
| Er-added region | Entire core region |
| Er concentration | 1,000 wtppm |
| cut-off wavelength | 1,400 nm |

The measurement result is indicated in a table 2 and Fig. 2. As apparent from the table 2 and Fig. 2, it can be understood that when the above-explained relative refractive index difference "$\Delta$" is gradually decreased, the gain is increased in the vicinity of approximately 0. 6 of this relative refractive index difference "$\Delta$." This is caused supposedly as follows: in the case that the relative refractive index difference "$\Delta$" is decreased, in order to make the cut-off wavelength a constant value, the diameter of the core is increased, whereby a total number of erbium ions per unit length of the light amplifying optical fiber is increased, and thus the gain efficiency at least in the L-BAND range is increased.

(TABLE 2)

| relative refractive index difference (%) | gain (dB) |
|---|---|
| 0.2 | 23.9 |
| 0.8 | 28.1 |

(TABLE 2)   (continued)

| relative refractive index difference (%) | gain (dB) |
|---|---|
| 0.6 | 31.0 |
| 1.0 | 28.0 |
| 1.5 | 24.8 |

Also, when the relative refractive index difference "Δ" becomes smaller than approximately 0.6, the gain is gradually decreased. This fact may be conceived from the reason that, when the relative refractive index difference "Δ" is excessively decreased, losses caused by bending of the light amplifying optical fiber are conspicuously increased. To support this consideration, inventors of the present invention carried out the measurements of bending losses under such a condition that among the light amplifying optical fibers indicated in the table 1, in such light amplifying optical fibers whose relative refractive index differences were equal to 0.3, 0.6, and 1.0%, bending losses were measured in the wavelength of 1,580 nm when the bending diameter was selected to be 12.5 mm. The measurement results are indicated by a circle symbol in Fig. 2. As a result of the measurement, it can be seen that, when the relative refractive index difference becomes smaller than 0.6%, the increase of losses caused by bending the light amplifying optical fiber occurs.

The region where the lowering amount of the gain from the maximum value in the wavelength of 1.58 μm becomes equal to 3 dB or lower, corresponds to such a region where the above-explained relative refractive index difference "Δ" is equal to 0.3% or larger and equal to 1 % or smaller. Then, since this light amplifying optical fiber is applied to the wavelength division multiplexing optical transmission, the length of the light amplifying optical fiber required to achieve the proper gain at least in the L-BAND range can be shortened. Thus, in the light amplifying optical fiber according to this first embodiment, the relative refractive index difference "Δ" is made equal to 0.3 % or larger, and equal to 1 % or smaller.

It should also be noted that the cladding 5 is formed by $SiO_2$ in this embodiment. Alternatively, while the cladding 5 may be formed by $F-SiO_2$, namely $SiO_2$ into which fluorine is added, the refractive index profile may be defined as a refractive index profile shown by a dashed line of Fig. 1. As explained above, when fluorine is added to the cladding 5, even if an adding amount of germanium which is added to the core 1 is reduced, the relative refractive index difference "Δ" of the core 1 with respect to the cladding 5 may be made equal to the above-described relative refractive index difference.

In accordance with this embodiment, since the relative refractive index difference "Δ" of the core 1 with respect to the cladding 5 is made equal to 0.3 % or larger and equal to 1 % or smaller based on the above-explained consideration result, the light amplifying optical fiber whose gain at least in the L-BAND range is high can be arranged. As a consequence, when the light amplifying optical fiber according to this embodiment is applied to the wavelength division multiplexing optical transmission, at least the signal light of the L-BAND range can be amplified by this optical fiber having the shorter length than that of the conventional optical fiber. Therefore, the various problems such as increasing of the noise figure and the polarization mode dispersion (PMD), the non-linear optical effect, and the accumulation of chromatic dispersion can be suppressed, thus reducing the cost.

It should also be noted that in this embodiment, the amplification characteristic in the L-BAND range is represented. Since the relative refractive index difference "Δ" of the light amplifying optical fiber is lower than that of the conventional light amplifying optical fiber, a similar effect may be achieved also in the L-BAND range.

Next, a description will now be made of a light amplifying optical fiber according to a second embodiment of the present invention. The light amplifying optical fiber of this second embodiment is arranged by that this optical fiber owns a refractive index profile shown by a solid line of Fig. 1, and a relative refractive index difference "Δ" is set to equal to 0.3 % or larger, and equal to 1 % or smaller. Also, the light amplifying optical fiber of this second embodiment is featured by that a diameter of a core of this optical fiber is made of such a core diameter value which is larger than a core diameter of a place where a mode field diameter becomes minimum on a characteristic line indicative of a relationship between a mode field diameter and a core diameter in an pumping light wavelength of a light amplification.

In order to specify a structure of the light amplifying optical fiber according to the second embodiment, inventors of the present invention manufactured the following light amplifying optical fibers as a trial model. That is, as indicated in a table 3, while a core composition was made of $Er-Al_2O_3-GeO_2-SiO_2$, and a cladding composition was made of $SiO_2$, erbium was added to the entire region of the core, the concentration of which was selected to be 1,000 wtppm, and also, the relative refractive index differences "Δ" of the core 1 with respect to the cladding 5 were selected to be 1 %. While a diameter of the core is used as a parameter, the light amplifying optical fibers having the respective core diameters as shown in the table 3 were manufactured as the trial models. Then, a gain per unit length of the optical fiber obtained in a wavelength of 1.58 μm of each of these light amplifying optical fibers manufactured as the trial model was measured. It should be understood that in this second embodiment, while a length of each of these trial light amplifying optical fibers is selected to be such a fiber length by which the gain thereof becomes a maximum, other measurement conditions were carried out in a similar manner as to that of the above-explained first embodiment, by which the gains of the respective light amplifying optical fibers having the wavelengths of 1.58 μm were measured.

(TABLE 3)

| core composition | $Er\text{-}Al_2O_3\text{-}GeO_2\text{-}SiO$ |
|---|---|
| cladding composition | $SiO_2$ |
| relative refractive index difference | 1.0 % |
| Er added region | entire core region |
| Er concentration | 1,000 wtppm |
| core diameter | 3.5, 4.5, 6.0 μm |

The measurement results are represented in a table 4:

(TABLE 4)

| core diameter | gain per unit length (dB/m) |
|---|---|
| 3.5 | 0.21 |
| 4.5 | 0.25 |
| 6.0 | 0.34 |

As apparent from this table 4, while the core diameter is gradually increased, the gain per unit length in the wavelength of 1.58 μm is increased. This fact may be conceived from the following reason. That is, while the core diameter is gradually increased, since an overlap integral between an optical mode distribution of light propagated through the light amplifying optical fiber and a distribution profile of erbium ions is increased, an absorption amount by the erbium ions per unit length of the optical fiber is increased. As a result, the gain per unit length of the optical fiber is increased.

As a consequence, in order to support this consideration, inventors of the present invention acquired such a relationship established between the core diameter and the overlap integral between the distribution profile of erbium and the mode distribution of the pumping light in the light amplifying optical fiber indicated in the table 3. The acquisition result is indicated in a characteristic line "a" of Fig. 3.

Also, the overlap integral "Γ" between the erbium distribution profile and the mode distribution of the pumping light, which is shown in a characteristic line "a" of Fig. 3, was calculated based upon the following formula (2), with the assumption that erbium is uniformly distributed in the region of the core 1 of the profile shown in Fig. 3, and that the light mode distribution of the light propagated through the light amplifying optical fiber is approximated as the Gussian distribution. It should also be noted that in the following formula (2), symbol "a" shows a radius of the core 1, and symbol "MFD" represents a calculation value of a mode field diameter corresponding to the diameter of the core 1:

$$\Gamma = 1 - \exp\{-(2a/MFD)^2\} \qquad (2)$$

Also, since the overlap integral is determined based upon the relationship between the core diameter and the mode field diameter in accordance with the above-explained formula (2), another relationship established between a mode field diameter and a core diameter in the wavelength of 1.48 μm corresponding to an pumping light wavelength of an optical amplifier was obtained in connection with the above-explained relationship, which is indicated by a characteristic line "b" of Fig. 3. The calculation value of the mode field diameter indicated by the characteristic line "b" of Fig. 3 was obtained based upon the definition of Petermann II, by assuming that the core in the light amplifying optical fiber is equal to such a step type profile as shown in Fig. 1, and calculates numeral values of an electric field distribution at a wavelength of pumping light. It should also be noted that actually measured values of the mode field diameters are indicated by solid circles in Fig. 3.

As apparent from Fig. 3, the overlap integral between the erbium distribution profile and the mode distribution of the pumping light is increased, as the core diameter is gradually increased. Also, the mode field diameter represents a convex-shaped (directed to a lower direction) curved line with respect to the core diameter, and there is such a core diameter by which the MFD may become minimum. In view of the pumping efficiency, since the pumping density of the region where the MFD becomes minimum is high, such a region is preferable. However, an overlap integral of this region is small, and an absorption value is small. As a consequence, considering such a case that the gain per unit length is increased, the core diameter is set to be larger than such a core diameter capable of minimizing the MFD, and the overlap integral is increased to eventually improve the gain coefficiency. As a consequence, as previously explained, in this second embodiment, the core diameter is selected to be such a value which is larger than, or equal to the core diameter of the position where the mode field diameter becomes minimum on the characteristic line "b".

Similar to the above-explained first embodiment, the light amplifying optical fiber according to the second embodiment owns the refractive index profile shown in Fig. 1, and the relative refractive index difference of the cladding 5 with respect to the core 1 is set to be equal to 0.3 % or larger, and also equal to 1 % or smaller. As a result, this second embodiment may achieve a similar effect to that of the first embodiment. It should also be understood that in this second embodiment, the cladding 5 may be formed by $F\text{-}SiO_2$, namely $SiO_2$ into which fluorine is added.

Also, the light amplifying optical fiber of this second embodiment is manufactured based upon the above-described consideration in such a manner that the core value is selected to be such a value which is larger than, or equal to the value of the core diameter at the region where the mode field diameter becomes a minimum. As a consequence, while the overlap integral defined between the erbium distribution profile and the absorption amount of erbium per unit length of the optical fiber is increased, so that the gain per unit length can be furthermore increased.

It should be understood that the present invention is not limited to the above-described respective embodiments, but may be modified by various modes. For instance, in each of the above-explained embodiments, the composition of the core is made of $Er\text{-}Al_2O_3\text{-}GeO_2\text{-}SiO_2$, and the composition of the cladding is made of $SiO_2$, or $F\text{-}SiO_2$. However, according to the present invention, both the core composition and the cladding composition are not specifically limited to these compositions. That is, under such a condition that erbium ions are added to the core 1, the relative refractive index difference of the core 1 with respect to the cladding 5 may be made equal to 0.3 % or larger, and also equal to 1 % or smaller.

Also, in each of the above-explained embodiments, the concentration of erbium is selected to be 1,000 wtppm. However, the present invention is not limited to this erbium concentration, but this erbium concentration may be properly set. In such a case that erbium concentration of an optical fiber may be made larger than 1,000 wtppm in the future, the erbium concentration may be furthermore increased, to furthermore increase a gain per unit length.

In addition, in each of the above-explained embodiments, the shape of the refractive index distribution is such a step type refractive index distribution as shown in Fig. 1. The refractive index distribution shape is not specifically restricted, but may be properly set. For instance, as well known from the W type refractive index distribution and the segment core type refractive index distribution, the refractive index area may be provided between the core 1 and the cladding 5, while the refractive index of this refractive index area is different from that of the areas located adjacent to this refractive index area.

Field of Industrial Application

As previously described, the light amplifying optical fiber according to the present invention may be suitably used as the optical fiber for the optical amplifier capable of amplifying the optical signal having the wavelength of the L-BAND range in the optical communication and the like.

**Claims**

1. A light amplifying optical fiber in which erbium is added into at least a core thereof, **characterized in that** a cladding is formed on the side of an outer peripheral portion of said core, said cladding having a refractive index smaller than that of said core, and that a relative refractive index difference of said core with respect to said cladding is made equal to 0.3 % or larger, and also equal to 1 % or smaller.

2. A light amplifying optical fiber as claimed in claim 1, wherein a diameter of the core of said light amplifying optical fiber is selected to a core diameter value which is larger than, or equal to a core diameter at a position where a mode field diameter becomes a minimum on a characteristic line indicative of a relationship between a mode field diameter and a core diameter in an excitation light wavelength of an optical amplification.

## Fig. 1

## Fig. 2

## Fig. 3

## INTERNATIONAL SEARCH REPORT

International application No.

PCT/JP00/08201

| A. CLASSIFICATION OF SUBJECT MATTER |
|---|
| Int.Cl⁷ H01S3/10, 3/067, G02B6/16 |

According to International Patent Classification (IPC) or to both national classification and IPC

| B. FIELDS SEARCHED |
|---|
| Minimum documentation searched (classification system followed by classification symbols)<br>Int.Cl⁷ H01S3/00-3/30,<br> G02B6/00-6/02, 6/10, 6/16-6/22, 6/34 |

Documentation searched other than minimum documentation to the extent that such documents are included in the fields searched
Jitsuyo Shinan Koho        1940-1996    Toroku Jitsuyo Shinan Koho   1994-2000
Kokai Jitsuyo Shinan Koho  1971-2000    Jitsuyo Shinan Toroku Koho   1996-2000

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | EP, 883219, A (FURUKAWA ELECTRIC),<br>09 December, 1998 (09.12.98),<br>Full text; Fig. 1<br>& US, 6055353, A    & JP, 10-339819, A | 1-2 |
| X | JP, 4-238836, A (Nippon Telegr. & Teleph. Corp. <NTT>),<br>26 August, 1992 (26.08.92),<br>Fig. 1; Par. No. [0005]   (Family: none) | 1 |
| X<br>A | US, 5027079, A (American Telephone & Telegraph Company ),<br>25 June, 1991 (25.06.91),<br>Column 6; lines 13 to 52<br>Column 6; lines 13 to 52<br>& EP, 437935, A    & JP, 4-212131, A<br>& CA, 2030437, A | 1<br>2 |
| A | JP, 3-48225, A (The Furukawa Electric Co., Ltd.),<br>01 March, 1991 (01.03.91),<br>Full text; all drawings   (Family: none) | 2 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 February, 2001 (06.02.01) | Date of mailing of the international search report<br>20 February, 2001 (20.02.01) |
|---|---|
| Name and mailing address of the ISA/<br>Japanese Patent Office | Authorized officer |
| Facsimile No. | Telephone No. |

Form PCT/ISA/210 (second sheet) (July 1992)